# EUROPEAN PATENT SPECIFICATION

(11) **EP 1 647 124 B1**
(45) Date of publication and mention of the grant of the patent: **08.11.2006**
(21) Application number: 04741553.4
(22) Date of filing: 18.05.2004
(51) Int. Cl.: H04L 29/06, H04M 1/725, G06Q 10/00

(54) **Managing diplay of dialogs in computing devices based on device proximity**
Verwaltung der Anzeige von Dialogen in Computergeräten basierend auf der Gerätenachbarschaft
Gestion d'affichage de dialogues dans des dispositifs informatique basés sur la poximité

(30) Priority: 12.06.2003 US 460457
(43) Date of publication of application: 19.04.2006
(73) Proprietor: International Business Machines Corporation, Armonk, N.Y. 10504 (US)
(72) Inventor: CARTER, William, Stephen, Round Rock, TX 78681 (US); RODRIGUEZ, Herman, Austin, TX 78730 (US); ROJAS, Hypatia, Round Rock, TX 78681 (US)
(74) Representative: Roberts, Scott Anthony
(86) International application number: PCT/EP2004/050770
(87) International publication number: WO 2004/112343

(56) References cited:
- EP-A- 1 197 901
- WO-A-01/74011
- US-A- 5 790 974
- US-A1- 2002 137 552

## Description

### Technical Field

The present invention relates generally to an improved data processing system and in particular, to a method and apparatus for managing presentation of data. Still more particularly, the present invention provides a method, apparatus, and computer instructions for managing presentation of dialogs in a set of devices.

### Background Art

Computing devices take many different forms. Computing devices may be, for example, a workstation, a laptop, a personal digital assistant (PDA), and a digital or mobile phone. Larger devices, such as workstations and personal computers provide large amounts of storage and computing power. Smaller computing devices, such as a PDA or mobile phone, do not have as much processing power or storage. These types of devices, however, provide portability and convenience for the user.

Users often keep databases of addresses and appointments. With portable computing devices, such as PDAs and mobile phones, a user is able to carry information, such as addresses and appointments on these devices to allow for easy access to this type of information. As users make changes while carrying these portable computing devices, the changes may be synchronized to databases located on less portable computing devices, such as a personal computer. In this manner, a user may have an up-to-date database of information on several computing devices.

One program frequently used is a calendar program. A user may create events that are stored for later review. Further, with an event, a reminder option may be created for this event. This reminder option causes the calendar program to present a pop-up dialog at a predetermined time prior to the event to remind the user of the upcoming event, as for example discloses in US 2002/0137552. However, given the availability of multiple computing devices, the synchronization of information between these devices may result in all of the devices presenting a pop-up dialog for the user to acknowledge the event and possibly set a "snooze" reminder.

Having multiple reminders requiring an acknowledgment provides a usability problem for a user because the user must repeatedly acknowledge the same reminder on different computing devices. Therefore, it would be advantageous to have an improved method, apparatus, and computer instructions for providing only a single reminder to the user.

### Disclosure of Invention

The present invention accordingly provides, in a first aspect, a method in a user computing device for presenting dialogs, the method comprising: receiving a request to display a dialog; identifying computing devices in proximity of the user computing device to form a set of proximate computing devices when the request is received; and presenting the dialog on the user computer device unless an overriding computing device is present in the set of proximate computing devices.

Preferably, in the method of the first aspect, data is synchronizable between the computing devices.

Preferably the method of the first aspect further comprises determining whether which device in the set of proximate devices is the overriding computing device.

Further preferably, in the method of the first aspect, the overriding computing device is determined based on a policy.

Preferably, in the method of the first aspect, user input is used to identify the overriding device.

The present invention accordingly provides, in a second aspect, a method in a user computing device for presenting dialogs in a set of computing devices including the user computing device, the method comprising: responsive to a request to present a dialog, identifying computing devices within the set of computing devices in a selected proximity of the user computing device to form a set of proximate computing devices; and selectively presenting the dialog on the user computing device based on a policy, wherein the policy results in only one of the user computing device and the set of proximate computing devices presenting the dialog.

Preferably, in the method of the second aspect, the policy includes priorities for the user computing device and the set of computing devices.

Further preferably, in the method of the second aspect, the presenting step comprises: determining whether the user computing device has a highest priority with respect to the set of proximate computing devices; and responsive to the user computing device having the highest priority with respect to the set of proximate computing devices, displaying the dialog on the user computing device.

Preferably the method of the second aspect further comprises determining whether the dialog has been previously presented on one of the set of computing devices; and responsive to a prior presentation of the dialog, preventing initiation of the presenting step.

Preferably, in the method of the second aspect, the set of computing devices include at least one of a laptop computer, a personal digital assistant, and a digital phone.

Preferably, in the method of the second aspect, the selected proximity occurs when wireless communication between the computing device and the set of computing devices is present.

Preferably, in the method of the second aspect, the dialog is for a reminder for a meeting.

Accordingly, the present invention further provides devices and computer program products in accordance with the methods above.

Thus, the present invention provides a method in a user computing device for presenting dialogs. Responsive to a request to present a dialog, an identification is made of computing devices within the set of computing devices in a selected proximity of the user computing device to form a set of proximate computing devices. This identification may be made during different times. For example, the identification may occur when a communications link is established or during synchronization of data. The dialog is presented only on one of the user computing device and the set of proximate computing devices based on a policy.

### Brief Description of the Drawings

A preferred embodiment of the present invention will now be described in detail by way of example only with reference to the following drawings:

**Figures 1A-1C** are diagrams illustrating computing devices used in providing a single reminder to a user in accordance with a preferred embodiment of the present invention;

**Figure 2** is a block diagram of a computing device in which the present invention may be implemented;

**Figure 3** is a block diagram of a computing device in the a form of a PDA in accordance with a preferred embodiment of the present invention;

**Figure 4** is a diagram illustrating components used to manage presentation of dialogs in computing devices in accordance with a preferred embodiment of the present invention;

F**igure 5** is a flowchart of a process for handling a request to display a dialog in accordance with a preferred embodiment of the present invention;

**Figure 6** is a flowchart of a process for managing acknowledgment of a reminder in accordance with a preferred embodiment of the present invention; and

**Figure 7** is a flowchart of a process for managing reminder events in accordance with a preferred embodiment of the present invention.

### Mode for the Invention

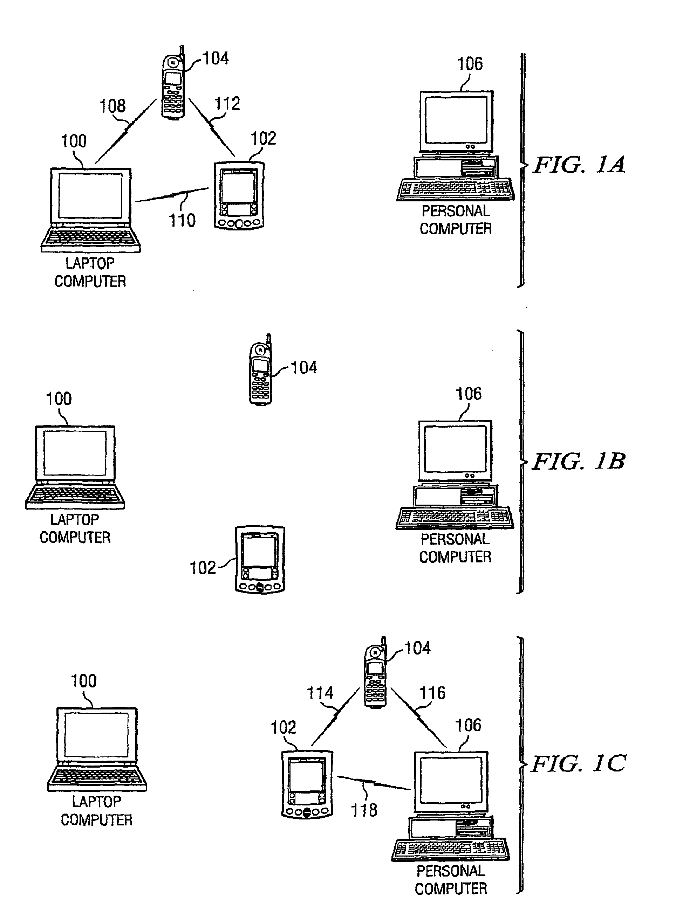

With reference now to the figures, and in particular, with reference to **Figures 1A-1C,** diagrams illustrating computing devices used in providing a single reminder to a user are depicted in accordance with a preferred embodiment of the present invention. In **Figure 1A,** laptop computer **100,** personal digital assistant **102,** and digital phone **104** are all in communication with one another, while not in communication with personal computer **106.** Laptop computer **100,** PDA **102,** and digital phone **104,** are in communication with each other through communications links **108, 110,** and **112.**

In these examples, these communications links are wireless links, are established using Bluetooth.These wireless links may follow various protocols. In this example, these links which is a standard developed by a group of electronics manufacturers that allows any sort of electronic equipment, from computers and cell phones to keyboards and headphones, to make its own connections, without wires, cables or any direct action from a user. The standard and specification for Bluetooth is set by the Bluetooth Special Interest Group. Depending on the particular implementation, other types of wireless connections may be employed, such as infrared or IEEE 802.11b, also known as Wi-Fi.

As described, each of these computing devices includes a calendar program, as well as calendar data for the calendar program. This calendar data includes events, as well as reminder options set for one or more of the events. For example, one event may be a meeting at 9:00 a.m. The reminder option for the event may generate a pop-up dialog thirty minutes prior to the meeting. This event may be initially set or calendared on one computing device, such as personal computer **106.** This event is synchronized with PDA **102** prior to the establishment of these communications links in this example.

When laptop computer **100,** laptop computer **100,** and digital phone **104** are in communication with each other, these devices are able to synchronize the calendar data. In particular, the event for the meeting may be propagated to calendar data in PDA **102** and digital phone **104** when the calendar data is synchronized between these computing devices. As a result, when a reminder is presented, normally this reminder is presented on all three of these devices. As a result, the user would be required to acknowledge the event or set the snooze option on all of the devices.

A preferred embodiment of the present invention provides a method, apparatus, and computer instructions for providing a mechanism to present the reminder only on one of the computing devices. In these examples, the dialogs are presented on a computing device only if the user is in proximity to acknowledge the dialog. The mechanisms allow a user to create a hierarchy of response computing devices based on proximity, such that the reminder is presented only on the highest priority device.

In one example, the user may select a priority for devices such that a dialog is presented on personal computer **106,** if either laptop computer **100,** PDA **102,** or digital phone **104** are in proximity of personal computer **106.** A second lower priority is if either PDA **102** or digital phone **104** is within proximity of laptop computer **100,** a dialog is presented on laptop computer **100.** Another priority that is set in this example is that dialogs are presented on PDA **102** if digital phone **104** is in proximity of PDA **102.** If neither laptop computer **100** nor PDA **102** is in proximity of digital phone **104,** then dialogs are presented on PDA **102** and digital phone **104.** In this example, two dialogs are present on two devices. These are dialogs that are outstanding waiting for an acknowledgment. If either one of the dialogs is acknowledged and the devices come within proximity of each other, then the dialogs are synchronized. The dialog that is not acknowledged is automatically dismissed because the other dialog has been acknowledged.

PDA **102** and digital phone **104** are considered to be in proximity of laptop computer **100** if a communications link is established with these devices. The proximity may be established based on a distance or range between the devices, the establishment of a communications link between the devices, or when the devices communicate with each other, such as during synchronization of data. If the devices cannot communicate with each other, then they are not considered within proximity of each other.

In **Figure 1A,** a dialog is presented on laptop computer **100,** while no dialogs are presented on PDA **102,** digital phone **104,** and personal computer **106.** Personal computer **106** does not present a dialog because this device is not in communication with any of the other devices set in the priority scheme. Dialogs are presented on laptop computer **100** in this example, while suppressed on the other devices.

In **Figure 1B,** none of the computing devices are in communication with each other. Digital phone **104** and PDA **102** are carried by a user out of communication range of laptop computer **100** and personal computer **106.** PDA **102** is turned off. In this situation, dialogs are presented on digital phone **104.** If PDA **102** was turned on and in communication with digital phone **104,** then dialogs would be presented on PDA **102.**

Next, in **Figure 1C,** PDA **102,** digital phone **104,** and personal computer **106** are in communication with each other through communications links **114, 116,** and **118.** If the meeting event was acknowledged, personal computer **106** will not present a dialog because the setting of this snooze option was communicated by one or both of PDA **102** and digital phone **104** when data is synchronized between the computing devices. If the computing devices are not presently connected or in communication with each other, the dialog is presented on all of the computing devices. When the computing devices are in proximity with each other, such as in communication or performing synchronization, the dialogs for all computing devices are dismissed if that dialog was acknowledged on any of the disconnecting computing devices. If no acknowledgment has been acknowledged, then the dialog is presented on one of the devices based on a priority scheme in these examples.

In this manner, a mechanism is provided to allow overriding of dialogs based on the proximity of a computing device to other computing devices. The name of the device that allows or initiates the override of dialogs may be discovered when a discovery process occurs. Data identifying other devices and their priorities may be saved in each of the devices by this process.

In these examples, a hierarchy of override devices may be set. For example, the hierarchy may be as follows: personal computer **106,** laptop computer **100,** PDA **102,** and digital phone **104** with personal computer **106** being the highest on the hierarchy and digital phone **104** being the lowest on the hierarchy. With this hierarchy, digital phone **104** does not present a dialog if laptop computer **100** is in proximity of digital phone **104.** Similarly, digital phone **104** does not present a dialog if PDA **102** is in proximity. Instead, the dialog is presented on PDA **102.** A dialog is presented on laptop computer **100** instead of PDA **102** if PDA **102** is in proximity of laptop computer **100.** A dialog is presented on personal computer **106** when PDA is in proximity of personal computer **106.** Personal computer **106** is considered an override device with respect to laptop computer **100.**

These priorities and hierarchies may be set using a policy that is implemented or stored in the different devices. Many different hierarchies or rules for what devices override other devices may be set depending on the particular implementation. Further, the dialog handling mechanism may be implemented with other numbers and/or types of computing devices other than those illustrated. For example, the override mechanism may be implemented only between digital phone **104** and laptop computer **100.**

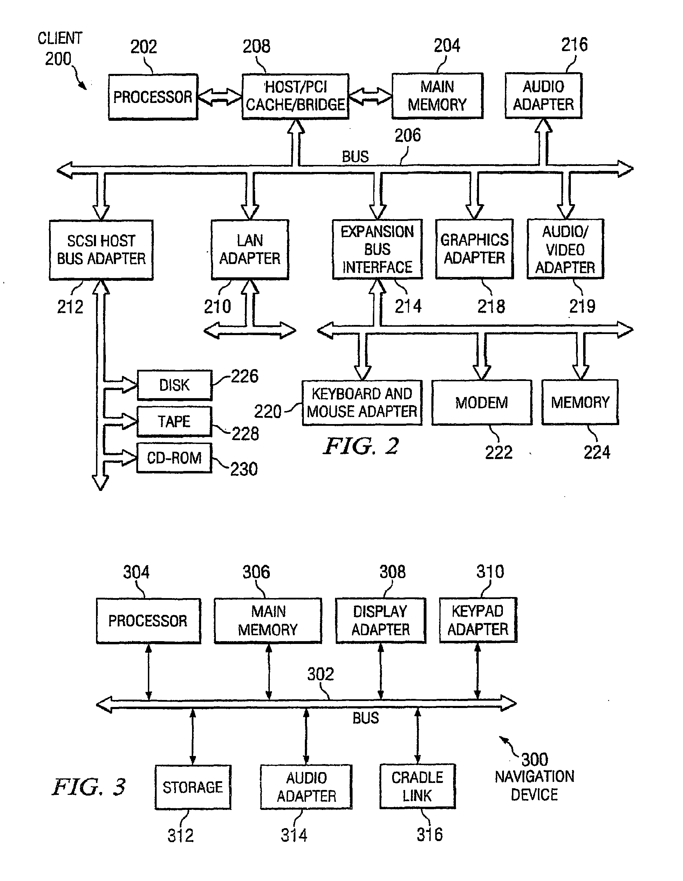

With reference now to **Figure 2,** a block diagram of a computing device is shown in which a preferred embodiment of the present invention may be implemented. Computing device **200** is an example of a computer, such as laptop computer **100** or personal computer **106** in **Figure 1,** in which code or instructions implementing the processes of a preferred embodiment of the present invention may be located. Data processing system **200** employs a peripheral component interconnect (PCI) local bus architecture. Although the depicted example employs a PCI bus, other bus architectures such as Accelerated Graphics Port (AGP) and Industry Standard Architecture (ISA) may be used. Processor **202** and main memory **204** are connected to PCI local bus **206** through PCI bridge **208.** PCI bridge **208** also may include an integrated memory controller and cache memory for processor **202.** Additional connections to PCI local bus **206** may be made through direct component interconnection or through add-in boards. In the depicted example, local area network (LAN) adapter **210,** small computer system interface SCSI host bus adapter **212,** and expansion bus interface **214** are connected to PCI local bus **206** by direct component connection. In contrast, audio adapter **216,** graphics adapter **218,** and audio/video adapter **219** are connected to PCI local bus **206** by add-in boards inserted into expansion slots. Expansion bus interface **214** provides a connection for a keyboard and mouse adapter **220,** modem **222,** and additional memory **224.** SCSI host bus adapter **212** provides a connection for hard disk drive **226,** tape drive **228,** and CD-ROM drive **230.** Typical PCI local bus implementations will support three or four PCI expansion slots or add-in connectors.

An operating system runs on processor **202** and is used to coordinate and provide control of various components within computing device **200** in **Figure 2.** The operating system may be a commercially available operating system such as Windows XP, which is available from Microsoft Corporation. Instructions for the operating system and applications or programs are located on storage devices, such as hard disk drive **226,** and may be loaded into main memory **204** for execution by processor **202.**

Those of ordinary skill in the art will appreciate that the hardware in **Figure 2** may vary depending on the implementation. Other internal hardware or peripheral devices, such as flash read-only memory (ROM), equivalent non-volatile memory, or optical disk drives and the like, may be used in addition to or in place of the hardware depicted in **Figure 2.** Also, the processes of a preferred embodiment of the present invention may be applied to a multiprocessor data processing system.

For example, computing device **200,** if optionally configured as a network computer, may not include SCSI host bus adapter **212,** hard disk drive **226,** tape drive **228,** and CD-ROM **230.** In that case, the computer, to be properly called a client computer, includes some type of network communication interface, such as LAN adapter **210,** modem **222,** or the like. As another example, data processing system **200** may be a stand-alone system configured to be bootable without relying on some type of network communication interface, whether or not data processing system **200** comprises some type of network communication interface.

The depicted example in **Figure 2** and above-described examples are not meant to imply architectural limitations. Computing device **200** also may be a kiosk or a Web appliance.

The processes of a preferred embodiment of the present invention are performed by processor **202** using computer implemented instructions, which may be located in a memory such as, for example, main memory **204,** memory **224,** or in one or more peripheral devices **226-230.**

Turning now to **Figure 3** a block diagram of a computing device in the a form of a PDA is shown in accordance with a preferred embodiment of the present invention. PDA **300** is an example of a PDA, such as PDA **102** in **Figure 1,** in which code or instructions implementing the processes of a preferred embodiment of the present invention may be located. PDA **300** includes a bus **302** to which processor **304** and main memory **306** are connected. Display adapter **308,** keypad adapter **310,** storage **312,** and audio adapter **314** also are connected to bus **302.** Cradle link **316** provides a mechanism to connect PDA **300** to a cradle used in synchronizing data in PDA **300** with another data processing system. Further, display adapter **308** also includes a mechanism to receive user input from a stylus when a touch screen display is employed.

An operating system runs on processor **304** and is used to coordinate and provide control of various components within PDA **300** in **Figure 3.** The operating system may be, for example, a commercially available operating system such as Windows CE, which is available from Microsoft Corporation. Instructions for the operating system and applications or programs are located on storage devices, such as storage **312,** and may be loaded into main memory **306** for execution by processor **304.**

Those of ordinary skill in the art will appreciate that the hardware in **Figure 3** may vary depending on the implementation. Other internal hardware or peripheral devices, such as flash ROM (or equivalent non-volatile memory) or optical disk drives and the like, may be used in addition to or in place of the hardware depicted in **Figure 3.**

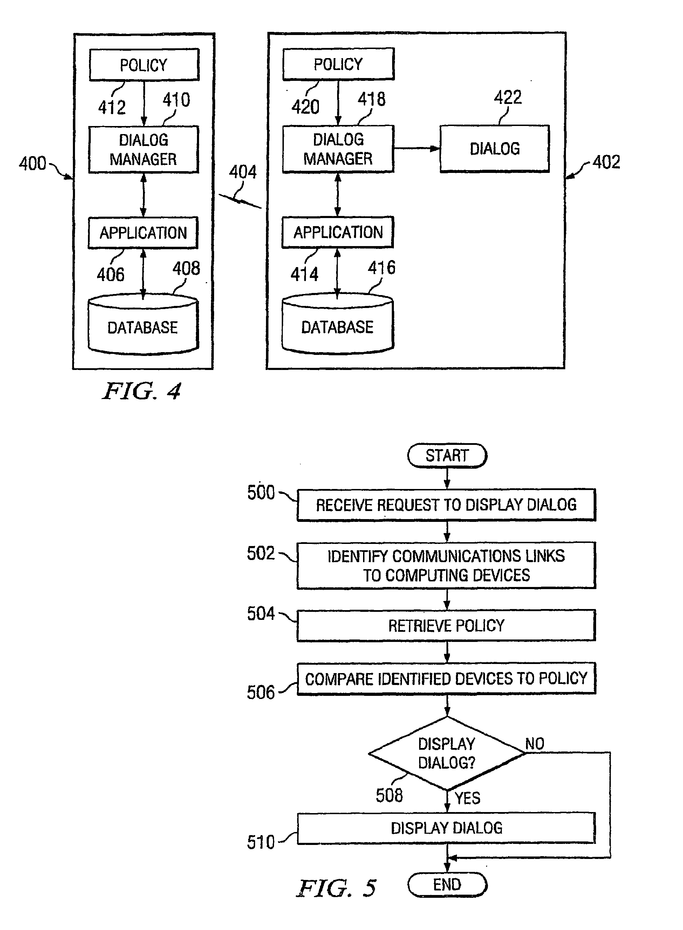

Turning next to **Figure 4,** a diagram illustrating components used to manage presentation of dialogs in computing devices is depicted in accordance with a preferred embodiment of the present invention. In this example, computing device **400** and computing device **402** are illustrated as being in communication with each other through communications link **404.**

Computing device **400** includes application **406,** which accesses data in database **408.** Although the mechanism described herein may be applied to any application that generates dialogs, in this example, application **406** is a calendar application, and database **408** is a database of events. Dialog manager **410** is the component that manages dialogs, including the override scheme of a preferred embodiment of the present invention. Dialog manager **410** selectively displays dialogs in response to requests from applications, such as application **406.** Policy **412** contains the data used to determine whether dialog **410** will display a dialog in response to a request from application **406.** Computing device **402** contains application **414,** database **416,** dialog manager **418,** and policy **420.**

In this example, computing device **400** is a digital phone, while computing device **402** is a laptop computer. Computing device **402** is a device having a higher priority than computing device **400.** Computing device **402** is considered as being the override device. These priorities are stored in policy **412** and policy **420.**

Database **408** is synchronized with database **416.** As a result, if an event stored in the databases includes an option for a reminder dialog, both application **406** and application **414** will make requests to dialog manager **410** and dialog manager **418** to present a dialog at the same time. Dialog manager **410** and dialog manager **418** will both search to see if another computing device is in proximity. In this example, proximity is present when a communications link is established between computing device **400** and computing device **402.** Proximity also may be determined via device synchronization. Additionally proximity may be provided by another party, such as a telephone company providing information to a laptop indicating the location of the digital phone. Additionally, proximity may be based on location information obtained from a global positioning satellite (GPS) system. In such a case, coordinate ranges are identified and messages may be sent to the appropriate computing devices. Further, proximity may also be determined via other events, such as the time of day. For example, a policy may be created containing a rule in which the rule states that on Monday through Friday, the laptop computer and the PDA are within proximity of each other and that dialogs should be presented only on the laptop. In this case, the user inputs the proximity information. This type of proximity is also referred to as "static proximity" because the user inputs the condition of proximity. In these examples, proximity can also be established by determining whether the signal strength is greater than a selected amount. Even the CPU "noise" from other devices may be used to determine proximity.

Once computing device **400** and computing device **402** have discovered each other, dialog manager **410** checks policy **412,** while dialog manager **418** checks policy **420** to determine whether a dialog should be presented in response to requests from an application. In this example, dialog manager **410** identifies computing device **402** as being an override device and does not present a dialog. Dialog manager **418** does not detect a device that has a higher priority. As a result, dialog **422** is presented to the user by device **402.** Priorities or rules may be established in policy **412** for use in determining which computing device is to present a dialog. With priority, device use may be employed to set the priority. For example, if one computing device detects that the user is operating the computing device, such as a laptop, that computing device may inform other computing devices that the user is present at the laptop and that dialog should be presented only on the laptop.

If the user acknowledges the event, dialog **422** is closed. Dialogs may be displayed on all computing devices not within proximity of each other. In this case, if the user acknowledges any dialog on a computing device, then when all of the computing devices are within proximity of each other, all of the other dialogs for that event are automatically dismissed because of the acknowledgment of the dialog on one computing device by the user.

Thus, in this manner, dialogs are managed between multiple computing devices such that only a single dialog is presented to a user based on the proximity of computing devices to each other and priorities selected for the computing devices.

Turning next to **Figure 5,** a flowchart of a process for handling a request to display a dialog is depicted in accordance with a preferred embodiment of the present invention. The process illustrated in **Figure 5** may be implemented in a process, such as dialog manager **410** in **Figure 4**.

The process begins by receiving a request to display a dialog (step **500).** The request is received from an application, such as application **406** in **Figure 4.** In this example, the application is a calendar program requesting a dialog to be presented for a reminder. The process then identifies communications links to computing devices (step **502).** This step is used to determine what other computing devices are in proximity. Thereafter, a policy is retrieved (step **504).** The policy contains rules and/or priorities that are used to determine whether a dialog is to be presented.

Next, the identified devices are compared to the policies (step **506**). Based on this comparison, a determination is made as to whether the dialog should be displayed (step **508).** If the dialog is to be displayed, the display of the dialog is then initiated (step **510** ), with the process terminating thereafter. Otherwise, the process terminates without displaying the dialog on the computing device.

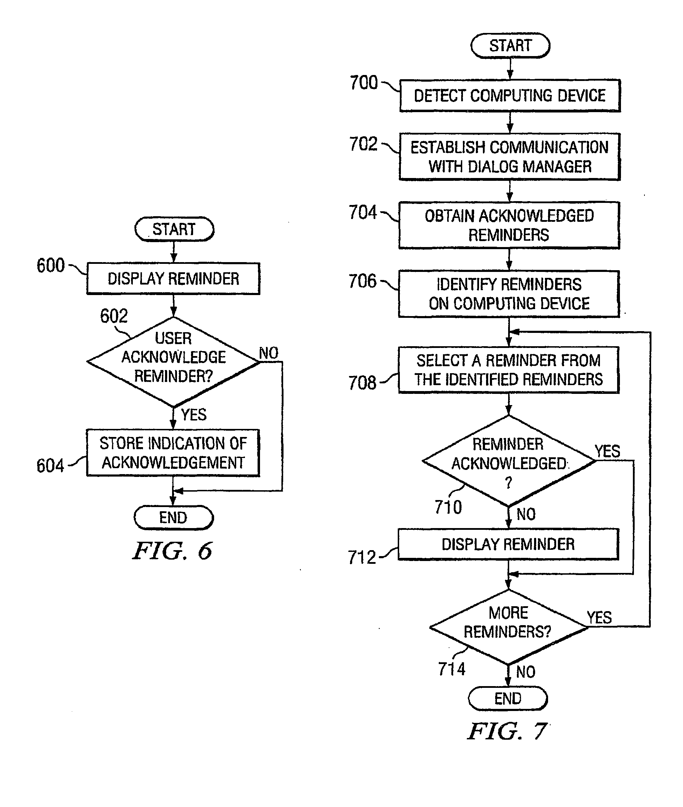

Turning next to **Figure 6,** a flowchart of a process for managing acknowledgment of a reminder is depicted in accordance with a preferred embodiment of the present invention. The process illustrated in **Figure 6** may be implemented in a process, such as dialog manager **410** in **Figure 4.** The process may be located in other locations too, such as in an application, the operating system, or even in firmware.

The process begins by displaying the reminder (step **600).** A determination is made as to whether the user has acknowledged the reminder (step **602**). If the user acknowledges the reminder, an indication of this reminder is stored (step **604**), with the process terminating thereafter. With reference again to step **602,** if the user does not acknowledge the reminder, the process terminates.

The process illustrated in **Figure 6** is used to handle acknowledgment of reminders across different computing devices. Acknowledgment of a reminder on one computing device is stored and communicated to other computing devices to indicate that the reminder is no longer needed.

Turning next to **Figure 7,** a flowchart of a process for managing reminder events is depicted in accordance with a preferred embodiment of the present invention. The process illustrated in **Figure 7** may be implemented in a process, such as a dialog manager **410** in **Figure 4.** The process begins by detecting a computing device (step **700).** Communication is then established with a dialog manager on the other computing device (step **702).** Thereafter, acknowledgments of reminders are obtained from the other computing device (step **704).** Then, any reminders that are present in the system are identified (step **706).** A reminder from the identified reminders is selected (step **708).**

Then, a determination is made as to whether that reminder has been acknowledged (step **710).** If the reminder has not been acknowledged, then the reminder is then displayed (step **712).** A determination is then made as to whether additional reminders are present for processing (step **714).** If additional reminders are present, then the process returns to step **708** to select another reminder. Otherwise the process terminates.

As a result, pending acknowledgments may be automatically dismissed when disconnected computing devices are presented with a dialog that was not acknowledged, but these computing devices come within proximity of a computing device on which the dialog has been acknowledged. In this manner, a single dialog acknowledgment is provided. Thus, provided is a method, apparatus, and computer instructions for allowing dialogs to be presented only on a single computing device. The mechanism overrides the display of dialogs on other computing devices that are in proximity to a selected computing device. In this manner, a user is able to see a single dialog without having to acknowledge the same dialog on multiple devices. The depicted examples illustrate the management of dialogs with respect to reminders for a calendar program. This mechanism may be applied to any other application that displays dialogs with respect to data that is synchronized between computing devices. Additionally, the mechanism of has been illustrated as being implemented in a dialog manager process. This process may be implemented in various ways. For example, the process could be implemented as part of an operating system, a separate program, or part of an application, such as a calendar program.

It is important to note that while preferred embodiments of the present invention has been described in the context of a fully functioning data processing system, those of ordinary skill in the art will appreciate that the processes are capable of being distributed in the form of a computer readable medium of instructions and a variety of forms and that the the mechanisms apply equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular data processing system.

## Claims

1. A method in a user computing device for presenting dialogs, the method comprising: receiving a request to display a dialog; identifying computing devices in proximity of the user computing device to form a set of proximate computing devices when the request is received; and presenting the dialog on the user computer device unless an overriding computing device is present in the set of proximate computing devices.

2. The method of claim 1, wherein data is synchronizable between the computing devices.

3. The method of claim 1 further comprising: determining which device in the set of proximate devices is the overriding computing device.

4. The method of claim 3, wherein the overriding computing device is determined based on a policy.

5. The method of claim 1, wherein user input is used to identify the overriding device.

6. A user computing device for presenting dialogs, the user computing device comprising: receiving means for receiving a request to display a dialog; identifying means for identifying computing devices within a set of computing devices in proximity of the user computing device to form a set of proximate computing devices when the request is received; and presenting means for presenting the dialog on the user computer device unless an overriding computing device is present in the set of proximate computing devices.

7. A computer program product in a computer readable medium for presenting dialogs in a set of computing devices, the computer program product comprising: first instructions, responsive to a request to present a dialog, for identifying computing devices within the set of computing devices in a selected proximity of a user computing device to form a set of proximate computing devices; and second instructions for selectively presenting the dialog on the user computing device based on a policy, wherein the policy results in only one of the user computing device and the set of proximate computing devices presenting the dialog.

## Patentansprüche

1. Verfahren in einer Rechnereinheit eines Benutzers zur Darstellung von Dialogen, wobei das Verfahren Folgendes umfasst: Empfangen einer Anforderung zum Anzeigen eines Dialogs; Erkennen von Rechnereinheiten in der Nähe der Rechnereinheit des Benutzers, wenn die Anforderung empfangen wird, zur Bildung eines Satzes von benachbarten Rechnereinheiten; und Darstellen des Dialogs auf der Rechnereinheit des Benutzers, wenn es im Satz der benachbarten Rechnereinheiten keine vorrangige Rechnereinheit gibt.

2. Verfahren nach Anspruch 1, bei dem Daten zwischen den Rechnereinheiten synchronisiert werden können.

3. Verfahren nach Anspruch 1, das ferner Folgendes umfasst: Ermitteln, welche Einheit im Satz der benachbarten Einheiten die vorrangige Einheit ist.

4. Verfahren nach Anspruch 3, bei dem die vorrangige Rechnereinheit gemäß einer Strategie festgelegt wird.

5. Verfahren nach Anspruch 1, bei dem eine Benutzereingabe zur Erkennung der vorrangigen Einheit verwendet wird.

6. Rechnereinheit eines Benutzers zum Darstellen von Dialogen, wobei die Rechnereinheit des Benutzers Folgendes umfasst: ein Empfangsmittel zum Empfangen einer Anforderung zum Anzeigen eines Dialogs; ein Erkennungsmittel zum Erkennen von Rechnereinheiten innerhalb eines Satzes von Rechnereinheiten in der Nachbarschaft der Rechnereinheit des Benutzers, um einen Satz benachbarter Rechnereinheiten zu bilden, wenn die Anforderung empfangen wird; und ein Darstellungsmittel zum Darstellen des Dialogs auf der Rechnereinheit des Benutzers, wenn es in der Gruppe der benachbarten Rechnereinheiten keine vorrangige Rechnereinheit gibt.

7. Computerprogrammprodukt auf einem computerlesbaren Medium zum Darstellen von Dialogen in einem Satz von Rechnereinheiten, wobei das Computerprogrammprodukt Folgendes umfasst: erste Befehle zum Erkennen von Rechnereinheiten innerhalb des Satzes von Rechnereinheiten in einer ausgewählten Nachbarschaft der Rechnereinheit des Benutzers als Reaktion auf eine Anforderung zur Darstellung eines Dialogs, um einen Satz benachbarter Rechnereinheiten zu bilden; und zweite Befehle zur selektiven Darstellung des Dialogs auf der Rechnereinheit des Benutzers gemäß einer Strategie, wobei die Strategie dazu führt, dass nur eine Rechnereinheit, entweder die Rechnereinheit des Benutzers oder eine der benachbarten Rechnereinheiten, den Dialog darstellt.

## Revendications

1. Procédé dans un dispositif informatique d'utilisateur destiné à présenter des dialogues, le procédé comprenant : la réception d'une demande d'afficher un dialogue, l'identification de dispositifs informatiques à proximité du dispositif informatique d'utilisateur pour former un ensemble de dispositifs informatiques proches lorsque la demande est reçue, et la présentation du dialogue sur le dispositif informatique d'utilisateur à moins qu'un dispositif informatique prioritaire ne soit présent dans l'ensemble de dispositifs informatiques proches.

2. Procédé selon la revendication 1, dans lequel des données peuvent être synchronisées entre les dispositifs informatiques.

3. Procédé selon la revendication 1 comprenant en outre : la détermination du dispositif dans l'ensemble de dispositifs proches qui est le dispositif informatique prioritaire.

4. Procédé selon la revendication 3, dans lequel le dispositif informatique prioritaire est déterminé sur la base d'une politique.

5. Procédé selon la revendication 1, dans lequel une entrée d'utilisateur est utilisée pour identifier le dispositif prioritaire.

6. Dispositif informatique d'utilisateur destiné à présenter des dialogues, le dispositif informatique d'utilisateur comprenant : un moyen de réception destiné à recevoir une demande d'afficher un dialogue, un moyen d'identification destiné à identifier des dispositifs informatiques au sein d'un ensemble de dispositifs informatiques à proximité du dispositif informatique d'utilisateur pour former un ensemble de dispositifs informatiques proches lorsque la demande est reçue, et un moyen de présentation destiné à présenter le dialogue sur le dispositif informatique d'utilisateur à moins qu'un dispositif informatique prioritaire ne soit présent dans l'ensemble de dispositifs informatiques proches.

7. Produit de programme informatique sur un support pouvant être lu par un ordinateur, destiné à présenter des dialogues dans un ensemble de dispositifs informatiques, le produit de programme informatique comprenant : des premières instructions, répondant à une demande de présenter un dialogue, destinées à identifier des dispositifs informatiques au sein de l'ensemble de dispositifs informatiques dans une proximité choisie d'un dispositif informatique d'utilisateur pour former un ensemble de dispositifs informatiques proches, et des secondes instructions destinées à présenter de manière sélective le dialogue sur le dispositif informatique d'utilisateur sur la base d'une politique, où la politique a pour résultat que seul l'un du dispositif informatique d'utilisateur et de l'ensemble de dispositifs informatiques proches présentera le dialogue.
